# EUROPEAN PATENT APPLICATION

(11) **EP 1 489 051 A1**
(43) Date of publication of application: **22.12.2004**
(21) Application number: 03253654.2
(22) Date of filing: 10.06.2003
(51) Int. Cl.: C03B 5/235, C03B 5/12

(54) **Method of making mineral fibres**

(71) Applicant: Rockwool International A/S, 2640 Hedehusene (DK)
(72) Inventor: Faarborg, Jorgen Kjerulff, Potrhcawl Mid Glamorgan CF36 3LB (GB)
(74) Representative: Samuels, Lucy Alice

(57) **Abstract**

The invention provides a method of producing man-made vitreous fibres comprising
providing in a shaft furnace a charge comprising raw materials and fuel and melting the raw materials to form a melt and forming fibres from the melt,
wherein the fuel comprises coke and a further carbonaceous fuel, at least 50 wt% of the further carbonaceous fuel being in the form of lumps of size at least 20 mm. The further carbonaceous fuel preferably comprises coal or anthracite.

## Description

This invention relates to processes of making man-made vitreous fibres (MMVF). In particular it relates to the choice of fuel suitable for use in such processes.

It is well known to make MMV fibres by charging to a shaft furnace a total charge which comprises a raw material charge and fuel. The raw materials are heated and caused to melt, and the melt is drawn from the furnace and formed into MMV fibres. The fuel used in such processes is almost invariably coke. Coke is generally used because of its favourable price and desirable combination of properties, in particular compressive strength, relatively high density, low reactivity and low volatile content (near zero) .

There have been suggestions published of use of other types of fuel in shaft furnaces. For instance, Ann. Occup. Hyg., Vol. 31, No. 4B, pp 529-545, 1987, refers to previous attempts to substitute carbonaceous slate for coke in a shaft furnace. US 4,661,119 describes briquettes containing fuel which is said to be coal and/or coke, as a means of using up fine coke or coal particles. Similarly, US 4,720,295 describes the use of fine coke particles in briquette form to provide fuel for a mineral wool production process. Coal is suggested as an alternative to coke in this context.

WO82/00460 describes forming a melt for production of mineral wool in which coal is supplied into the tuyere gas. This appears to be as an alternative to adding fuel to the furnace in the conventional manner with the raw materials.

US 5,107,517 describes use of a furnace for producing a melt for mineral wool. The burner runs on a fuel other than coke and coal is mentioned, although this is said to be unpreferred and gas or liquid fuel is better.

WO99/28246 describes the possibility of injecting a mixture of organic and inorganic waste materials into the tuyeres. The organic component can act as a fuel in addition to the coke which is included in the furnace in the standard manner.

Despite these suggestions, in practice the fuel has tended to be made up of 100% coke. It is normally added in lump form, but it is known to incorporate fine particles of coke into fuel briquettes.

It would be desirable to reduce the reliance on coke as essentially the only fuel in shaft furnace mineral wool production processes and in particular it would be desirable to be able to provide more economical fuel sources.

As mentioned above, coal has been suggested as a potential fuel source in furnaces but in practice the mineral wool production industry has been deterred from using carbonaceous fuels other than coke due to their perceived disadvantages being too great to merit their inclusion in the charge.

In particular, it is very important to control melt conditions in the furnace so that a regular flow of melt from the furnace at a desired viscosity and temperature is achieved. It is particularly important to minimise pressure variations in the furnace. These are influenced by the flow of air passing through the furnace. The air flow is provided via the tuyeres at the bottom of the furnace and travels substantially counter-currently to the charge towards the exhaust outlet at the top of the furnace. To provide adequate air-flow it is important that sufficient free space between the fuel and the raw material, and between the pieces of raw material, is maintained throughout the process. If this free space is significantly reduced the air-flow through the furnace can be affected and an undesired increase in pressure drop across the charge is observed. This can result in unstable melt flows exiting the furnace. In particular it can result in the melt exiting the furnace having undesirably low viscosity.

Coke is generally desirable because it is provided in the form of lumps of relatively large size and has high compressive strength and can thus conveniently contribute to maintenance of the necessary air space between the fuel and the raw materials.

Potential alternative carbonaceous fuels such as coals, particularly bituminous coals, are understood to soften during heating and consequently reduce in compression strength. This has in the past been generally expected to lead to undesirably reduced permeability and air-flow through the furnace, resulting in the problems mentioned above.

Similarly, the density and reactivity characteristics of other carbonaceous fuels have generally been considered to be inferior to those of coke.

Carbonaceous fuels such as coal are also known to release volatiles on heating and this was generally felt to be unacceptable as requiring scrubbing of exhaust gases, involving potential blocking of filter bags without any sufficient attendant advantages.

High rank (ie low volatiles) coals such as anthracite have also had the perceived disadvantage of high brittleness. Anthracite in particular is a carbonaceous fuel which those in the mineral wool industry have previously been deterred from using due to concern that it would lead to disintegration of lumps of fuel in the shaft furnace. This perceived problem was expected to occur to a greater extent with anthracite in lump form than with anthracite in fine particulate form.

According to the invention we provide a method of producing man-made vitreous fibres comprising
providing in a shaft furnace a charge comprising raw materials and fuel and melting the raw materials to form a melt and forming fibres from the melt,
wherein the fuel comprises coke and a further carbonaceous fuel, at least 50 wt% of the further carbonaceous fuel being in the form of lumps of size at least 20 mm.

Surprisingly, we have found that when carbonaceous fuels other than coke are combined with coke when in lump form, ie large particles of size at least 20 mm, it is possible to use them successfully as a significant component of the fuel in a shaft furnace. In particular, it is possible to use coals such as anthracite in such processes, as the carbonaceous fuel.

In particular, we have found that the perceived disadvantages discussed above can be avoided by choosing the order of addition of the raw materials, coke and further carbonaceous fuel to the furnace, by choosing the relative proportion of raw materials in the total charge and by choosing the particle size of the raw materials as well as the fuel.

The method of the invention comprises providing a charge in a shaft furnace. That is, the furnace is of the known type in which the charge is introduced at the top of the furnace and forms a stack. The charged materials pass down through the furnace and a pool of melt is formed in the lower part of the furnace. Melt is then drawn off from this melt pool. Preferably the shaft furnace is a cupola furnace.

The method comprises providing a charge to the furnace. The total charge comprises a raw material charge and fuel. The raw materials are the parts of the total charge which melt to form the melt from which fibres are produced. The fuel combusts in the furnace to provide energy for the melting process.

The raw materials can be provided in any convenient form. They can be provided as briquettes of particulate mineral material, which are generally made by compacting the required mineral material, often with a binder, to the appropriate size and shape. However, it is preferred that the raw materials are provided largely in the form of stone, that is larger rocks or other materials. The raw materials can be formed from virgin rock or they can be formed from secondary raw materials, such as industrial waste materials.

Raw materials in the form of stones or lumps generally have size at least 90% above 15 mm, preferably at least 90% above 20 mm. "Size" is defined as the minimum diameter of a stone or lump of raw material. Preferably the invention includes removal of fine particles of raw material before providing it to the furnace. Preferably not more than 10% of the particles, more preferably not more than 5%, have size below 10 mm. More preferably not more than 10%, especially not more than 5%, have size below 15 or 20 mm.

It is preferred in the invention that the fuel is also screened in the same way and has the same preferred particle size distribution.

Preferably at least 50%, more preferably at least 60%, in particular at least 80% and in some preferred cases substantially all of the raw materials are provided in stone form.

The fuel comprises coke and a further carbonaceous fuel. The coke can be provided in any convenient form. For instance it can be provided in lump form. Lumps are generally of size at least 20 mm, especially at least 30 or 40 mm, preferably not more than 200 mm and in particular from 60 to 150 mm. The "size" of a lump or particle in this specification is its minimum dimension. In preferred cases the lumps are shaped such that all of the dimensions are within the preferred ranges given.

Alternatively or additionally coke can also be provided as briquettes, in which fine particulate coke is compressed and molded into a fuel briquette. In this case the briquette may additionally comprise binder or filler material which is not combusted along with the coke. Such materials then contribute to the raw materials and form part of the melt.

In the invention it is also essential that the fuel comprises a further carbonaceous fuel in addition to the coke. This can be any carbonaceous material which is capable of combusting under the conditions in the furnace. Generally the fixed carbon content is at least 50%, often at least 60%,preferably at least 70%, most preferably at least 80%, usually in the range 82 to 95%. Fixed carbon content is the percentage of solid carbon in the carbonaceous fuel on a dry basis. It can be calculated by subtracting the concentration of ash and volatile matter (dry basis) from 100%.

In the invention it is essential that at least 50 wt% of the further carbonaceous fuel is in the form of lumps, ie large particles, of size at least 20 mm. That is, at least 50 wt% of this carbonaceous fuel is not included in briquettes.

The further carbonaceous fuel preferably has an apparent density in the range 400 to 2,000 kg/m³, preferably 600 to 1,700 kg/m³. In particular it can be at least 1,250, more preferably at least 1,300 and in particular at least 1,400 kg/m³.

Carbonaceous fuels having these properties have previously been believed to be unsuitable for use as a component of the fuel in a shaft furnace and the invention surprisingly finds that if they are provided in the form of lumps of size at least 20 mm the expected disadvantages do not arise.

Preferably the further carbonaceous fuel is a coal, and can be a coal of any rank. Thus it can be meta-anthracite, anthracite, semi-anthracite, low volatile bituminous coal, medium volatile bituminous coal, high volatile A bituminous coal, high volatile B bituminous coal, high volatile C bituminous coal, sub-bituminous A coal, sub-bituminous B coal, sub-bituminous C coal or lignite. Preferably it is anthracite.

Unexpectedly, we find that the use of anthracite coal in lump form gives good results in a shaft furnace process for production of mineral fibres, despite the prejudice, discussed above, against using it, especially in lump form, due to the expectation of problems arising with disintegration of lumps of fuel.

Anthracite has the further advantage that it has lower reactivity than coke, "reactivity" being understood in the mineral wool production industry as being an indication of burning rate or reaction rate. Thus we find that use of anthracite reduces the possibility of conversion of carbon dioxide into carbon monoxide in the upper part of the shaft furnace, a reaction which is endothermic and thus reduces thermal efficiency. This problem is one which is particularly important to address in the mineral wool production industry.

Anthracite has the further advantage over coke that, having a higher calorific value than coke, it results in additional energy being present in the flue gas which is conventionally sent from the furnace to the afterburner.

One surprising aspect of the use of anthracite as the further carbonaceous fuel in the invention is that it is nevertheless possible to provide the filter system through which the flue gas passes before the afterburner without increasing the risk of clogging of the filter system.

A yet further advantage of the use of anthracite as the further carbonaceous fuel is that it contributes ash to the raw material charge, after the anthracite has been burned as fuel, the ash having a small but significant content of Al₂O₃. In particular, the content of Al₂O₃ is greater than that in the ash which results from burning of coke and which remains in the furnace. Furthermore, the ash which results from the burning of coke can tend to contain fluxing material which it is believed that anthracite ash does not. Since the fuel can contribute a significant proportion (perhaps 15 to 20%) of the total charge to the furnace and ash can be present in amounts up to 10% of the total mass of fuel added, these attributes of anthracite can be significantly beneficial, for instance in the production of fibres which are intended to have defined but relatively low content of Al₂O₃. Use of anthracite can contribute at least part of the Al₂O₃ content.

A further surprising aspect of the use of anthracite is that the ash produced is known to have a higher softening temperature than the ash produced from coke. This might be expected to be disadvantageous as it would be expected to have the effect of coating the fuel and thus reducing combustion efficiency. This would be a particular problem in mineral wool production processes. However, we find surprisingly that use of anthracite does not lead to problems of this nature.

Anthracite has the further advantage that the above benefits can be obtained using a material which is economical and widely available.

It is essential that at least 50 wt% of the further carbonaceous fuel is in the form of lumps of size at least 20 mm. The lumps are preferably of size below 200 mm, preferably at least 30 or 40 mm and in particular from 70 to 150 mm.

Preferably at least 60 wt%, more preferably at least 70 wt%, in particular at least 80 or 90 wt% and generally substantially all of the further carbonaceous fuel is in the form of lumps of the defined size.

The ratio of further carbonaceous fuel to coke in the process preferably ranges from 5:95 to 60:40, in particular 10:90 to 50:50, especially from 15:85 to 35:65.

In the invention we find that the order in which the coke, further carbonaceous fuel and raw materials are added to the furnace can be significant in providing a good melt flow and maintaining the free space between the fuel and the raw material, despite use of further carbonaceous fuels such as coal.

The further carbonaceous fuel can be intimately mixed with the coke before charging to the furnace. However, it is preferred not to do this but instead to mix the coal intimately with the raw materials and to add this intimate mixture to the furnace before the coke is added.

The most preferred order of addition, however, is to add the further carbonaceous fuel between the raw materials and the coke. That is, the raw materials are added to the furnace, followed by the further carbonaceous fuel, followed by the coke or, alternatively, the coke is added, followed by the further carbonaceous fuel and then the raw materials.

We find that adding further carbonaceous materials such as anthracite between the raw materials and the coke can be particularly effective in minimising pressure variations in the furnace.

We also find that the ratio between the raw materials and the total fuel in the charge is important in minimising pressure variations and maintaining good air flow. Preferably the raw materials form no more than 90%, preferably no more than 87% of the charge, by weight based on total charge.

The invention can be used to produce a variety of types of man-made vitreous fibre, including rock fibres and glass fibres.

Glass fibres traditionally contain relatively low total amounts of alkaline earth metal and iron (calcium, magnesium and iron), generally below 12% measured as total oxides (iron being measured as FeO) .

Rock fibres generally contain at least 15%, usually more than 20%, total calcium, magnesium and iron oxides. Rock fibres preferably contain at least 1%, often at least 3% and frequently 5 to 12% iron measured as FeO.

The fibres generally contain SiO₂ in an amount of from 30 to 70%.

The invention is particularly useful in the production of fibres which can be shown to be soluble in physiological saline. Some such fibres contain a relatively low amount of aluminium, for instance not more than 4%, optionally together with 1 to 5% boron. Typical of these low aluminium fibres are the disclosures in, for instance, EP-A-459897 and in WO 92/09536, WO 93/22251 and WO 96/00196.

The invention can also be applied to the production of fibres which have higher aluminium content, for instance at least 15% and even at least 70% and in certain cases at least 18% Al₂O₃, eg. up to 30, 35 or 40% Al₂O₃. Suitable high aluminium, biologically soluble fibres which can be advantageously made in the present invention are described in WO 96/14454 and WO 96/14274. Others are described in WO 97/29057, DE-U-2970027 and WO 97/30002.

In general the fibres and the melt from which they are formed have an analysis within the various ranges defined by the following preferred lower and upper limits:
SiO₂ at least 30, 32, 35 or 37; not more than 51, 48, 45 or 43
Al₂O₃ at least 12, 14, 15, 16 or 18; not more than 35, 30, 26 or 23
CaO at least 8 or 10; not more than 30, 25 or 20
MgO at least 2 or 5; not more than 25, 20, 15 or 12
FeO (including Fe₂O₃) at least 2, 3 or 5; not more than 15, 12, 10 or 8
FeO + MgO at least 8, 10, 12; not more than 25, 20, 15
Na₂O + K₂O zero or at least 1 or 2; not more than 10 or 8
CaO + MgO at least 20, 25, 30; not more than 45, 40
TiO₂ zero or at least 1; not more than 4, 2
Tio₂ + FeO at least 4, 6; not more than 12, 10
B₂O₃ zero or at least 1; not more than 5, 3
P₂O₅ up to 10; preferably at least 0.5, 1; preferably not more than 6, 5, 4
Others zero or at least 1; not more than 8, 5

The fibres preferably have a sintering temperature above 800°C, more preferably above 1000°C.

The melt preferably has a viscosity at fibre forming temperature of 5 to 100 poise, preferably 10 to 70 poise at 1400°C.

The fibres preferably have an adequate solubility in lung fluids as shown by *in vivo* tests or *in vitro* tests, typically conducted in physiological saline buffered to about pH 4.5. Suitable solubilities are described in WO 96/14454. Usually the rate of dissolution is at least 10 or 20nm per day in that saline.

## Claims

1. A method of producing man-made vitreous fibres comprising
providing in a shaft furnace a charge comprising raw materials and fuel and melting the raw materials to form a melt and forming fibres from the melt,
wherein the fuel comprises coke and a further carbonaceous fuel, at least 50 wt% of the further carbonaceous fuel being in the form of lumps of size at least 20 mm.

2. A method according to claim 1 in which the further carbonaceous fuel comprises coal.

3. A method according to claim 2 in which the coal is anthracite.

4. A method according to any preceding claim in which the further carbonaceous fuel is in the form of lumps of size from 40 to 200 mm, preferably from 70 to 150 mm.

5. A method according to any preceding claim in which the coke is in the form of lumps of size from 40 to 200 mm, preferably from 60 to 150 mm.

6. A method according to any preceding claim in which the raw materials comprise stones and the further carbonaceous fuel is added to the furnace after the coke is added and before the stones are added.

7. A method according to any of claims 1 to 5 in which the raw materials comprise stones and the further carbonaceous fuel is added to the furnace after the stones are added and before the coke is added.

8. A method according to any preceding claim in which the ratio of further carbonaceous fuel to coke in the furnace is from 1:10 to 1:1.

9. A method according to any of claims 1 to 5 in which the proportion of raw materials in the charge is less than 90%, by weight based on total charge, preferably not more than 87%.

10. A method according to any preceding claim in which the furnace is a cupola furnace.

11. A method according to any preceding claim comprising screening the raw materials prior to providing the charge to the shaft furnace so that the raw materials added to the shaft furnace comprise no more than 10% by weight particles having size below 20 mm, preferably no more than 10% by weight particles having size below 10 mm, more preferably no more than 5 wt.% particles having size below 10 mm.

12. A method according to any preceding claim in which the fuel comprises no more than 10% particles having size below 20 mm, preferably no more than 10% particles having size below 10 mm, more preferably no more than 5% particles having size below 10 mm.

13. A method according to any preceding claim in which flue gas generated in the furnace is passed from the furnace through a filter system and subsequently through an afterburner.
